# EUROPEAN PATENT APPLICATION

(11) **EP 4 800 787 A1**
(43) Date of publication of application: **02.09.2026**
(21) Application number: 26156312.6
(22) Date of filing: 04.02.2026
(51) Int. Cl.: H01M 10/04, H01M 10/0587, H01M 50/167, H01M 50/534, H01M 50/538, H01M 50/586, H01M 50/593, H01M 50/595

(54) **SECONDARY BATTERY AND METHOD OF FABRICATING SECONDARY BATTERY**

(30) Priority: 28.02.2025 KR 20250026702
(71) Applicant: SAMSUNG SDI CO., LTD., Yongin-si, Gyeonggi-do 17084 (KR)
(72) Inventor: Kim, Dae Kyu, 16678 Gyeonggi-do, Suwon-si (KR)
(74) Representative: Meissner Bolte Partnerschaft mbB

(57) **Abstract**

The present invention relates to a secondary battery and a method of fabricating the secondary battery. The secondary battery of includes a case, an electrode assembly accommodated within the case, and a first insulating plate located exterior to the electrode assembly, the first insulating plate comprising a core portion and an insulating portion, the insulating portion having a rigidity less than a rigidity of the core portion, the insulating portion comprising an insulating material, the insulating portion surrounding the core portion.

## Description

### BACKGROUND

### 1. Field of the Invention

The present invention relates to a secondary battery and a method of fabricating the secondary battery.

### 2. Discussion of Related Art

A cylindrical secondary battery may include an electrode assembly accommodated in a case and an insulating plate interposed between the electrode assembly and a cap assembly. However, when assembling the secondary battery or charging and/or discharging the secondary battery, the insulating plate can be deformed and cause a short circuit in the secondary battery such that charging and discharging cannot be performed.

This background section is for the general understanding of the background of the present invention, and therefore, it may contain information that does not constitute related (or prior) art.

### SUMMARY OF THE INVENTION

The present invention is directed to a secondary battery in which the deformation of an insulating plate is suppressed, and a method of fabricating the secondary battery.

The invention concerns a secondary battery including: a case; an electrode assembly accommodated within the case; and a first insulating plate located exterior to the electrode assembly, preferably in the case, the first insulating plate including a core portion and an insulating portion, the insulating portion having a rigidity less than a rigidity of the core portion, the insulating portion including an insulating material, the insulating portion surrounding the core portion.

In some embodiments, the core portion may include a metal material.

In some embodiments, the core portion includes a metal.

In some embodiments, the secondary battery may further include a cap assembly which closes an opening that is open at one side of the case such that the electrode assembly is inserted into the case, wherein the first insulating plate may be interposed between one side of the electrode assembly and the cap assembly.

In some embodiments, the secondary battery further includes a cap assembly, the cap assembly closing an opening of the case, wherein the first insulating plate is interposed between one side of the electrode assembly and the cap assembly.

In some embodiments, the case may include a sidewall portion having an annular cross-sectional shape, a beading portion protruding between the first insulating plate and the cap assembly from the sidewall portion such that the cap assembly is spaced apart from the first insulating plate, and a crimping portion continuing from the beading portion and surrounding the cap assembly such that the cap assembly is not separated from the case.

In some embodiments, the case includes: a sidewall portion having a substantially annular cross-sectional geometry; a beading portion protruding between the first insulating plate and the cap assembly from the sidewall portion such that the cap assembly is spaced apart from the first insulating plate; and a crimping portion continuing from the beading portion and surrounding the cap assembly such that the cap assembly is not separated from the case.

In some embodiments, the beading portion may press the first insulating plate toward the electrode assembly.

In some embodiments, the first insulating plate may further include a central portion having a circular planar shape and having a uniform thickness and an annular outer circumferential portion continuing from an outer circumference of the central portion, inclined such that a thickness of the annular outer circumferential portion decreases in a radial direction of the first insulating plate, and pressed by the beading portion.

In some embodiments, the first insulating plate further includes: a central portion having a substantially circular planar geometry and having a substantially uniform thickness; and an annular outer circumferential portion continuing from an outer circumference of the central portion, the annular outer circumferential portion inclined such that a thickness of the annular outer circumferential portion decreases in a radial direction of the first insulating plate, and the annular outer circumferential portion is pressed by the beading portion.

In some embodiments, the first insulating plate may further include a central portion having a circular planar shape and a uniform thickness and an annular outer circumferential portion continuing from and stepped with an outer circumference of the central portion, having a thickness smaller than the thickness of the central portion, and pressed by the beading portion.

In some embodiments, the first insulating plate further includes: a central portion having a substantially circular planar geometry and a substantially uniform thickness; and an annular outer circumferential portion continuing from and have a step configuration with an outer circumference of the central portion, the annular outer circumferential portion having a thickness less than the thickness of the central portion, and the annular outer circumferential portion is pressed by the beading portion.

In some embodiments, the secondary battery may further include an electrode tab electrically connecting the electrode assembly and the cap assembly, wherein the first insulating plate may include a through hole through which the electrode tab passes.

In some embodiments, the secondary battery further includes: an electrode tab electrically connecting the electrode assembly and the cap assembly, wherein the first insulating plate further includes a through hole such that the electrode tab passes through the through hole.

In some embodiments, the first insulating plate may further include an inner insulating layer coated with an insulating member such that the core portion is not exposed at an inner surface of the through hole.

In some embodiments, the first insulating plate further includes an inner insulating layer coated with an insulating member such that the core portion is not exposed at an inner surface of the through hole.

In some embodiments, the electrode tab may include a tab core portion including a conductive material and an insulating sheath surrounding an outer circumferential surface of the tab core portion and including an insulating material.

In some embodiments, the electrode tab includes: a tab core portion comprising a conductive material; and an insulating sheath surrounding an outer circumferential surface of the tab core portion, the insulating sheath comprising an insulating material.

The invention concerns a method of fabricating a secondary battery, which includes a first insulating plate fabrication operation of fabricating a first insulating plate including a core portion and an insulating portion having lower rigidity than the core portion, including an insulating material, and surrounding the core portion, an electrode assembly insertion operation of inserting an electrode assembly into a case through an opening that is open at one side of the case, a first insulating plate insertion operation of inserting the first insulating plate into the case through the opening, and a cap assembly coupling operation of coupling a cap assembly to the case to close the opening.

In other words, the invention concerns a method of fabricating a secondary battery, including: fabricating a first insulating plate including a core portion and an insulating portion, the insulating portion having a rigidity less than a rigidity of the core portion, the insulating portion including an insulating material, the insulating portion surrounding the core portion; inserting an electrode assembly into a case through an opening that is open at one side of the case; inserting the first insulating plate into the case through the opening; and coupling a cap assembly to the case to close the opening.

In some embodiments, the first insulating plate fabrication operation may include a core portion setting operation of inserting the core portion into a forming mold and fixing the core portion in the forming mold and an insulating material injection operation of injecting an insulating material into the forming mold and curing the insulating material to form the insulating portion.

In some embodiments, the fabricating includes: inserting the core portion into a forming mold and fixing the core portion in the forming mold; and injecting an insulating material into the forming mold and curing the insulating material to form the insulating portion.

In some embodiments, the method of fabricating a secondary battery may further include a through hole forming operation of forming a through hole, which passes through the first insulating plate in a thickness direction, in the first insulating plate.

In some embodiments, the method of fabricating a secondary battery may further include an insulating member coating operation of coating an inner surface of the through hole with an insulating member to form an inner insulating layer.

In some embodiments, the method further includes coating an inner surface of the through hole with an insulating member to form an inner insulating layer.

In some embodiments, the first insulating plate fabrication operation may include a through hole forming operation of forming a through hole, which passes through the core portion in a thickness direction, in the core portion, a core portion setting operation of inserting the core portion, in which the through hole is formed, in a forming mold and fixing the core portion in the forming mold, and an insulating material injection operation of injecting an insulating material into the forming mold and curing the insulating material to form the insulating portion, wherein the insulating portion may cover the core portion such that the through hole is not closed.

In some embodiments, the fabricating includes: forming a through hole through the core portion in a thickness direction; inserting the core portion in a forming mold and fixing the core portion in the forming mold; and injecting an insulating material into the forming mold and curing the insulating material to form the insulating portion, wherein the insulating portion covers the core portion such that the through hole is not closed.

### BRIEF DESCRIPTION OF THE DRAWINGS

The drawings illustrate embodiments of the present invention, and further describe aspects and features of the present invention along with the detailed description of the present invention. Thus, the present invention should not be construed as being limited to the drawings:
FIG. 1 is a perspective view illustrating a secondary battery according to embodiments of the present invention;
FIG. 2 is a longitudinal cross-sectional view illustrating the secondary battery according to embodiments of the present invention;
FIG. 3 is an enlarged cross-sectional view illustrating a first insulating plate and a first electrode tab of FIG. 2 according to embodiments of the present invention;
FIG. 4 is a plan view illustrating the first insulating plate of FIG. 3 according to embodiments of the present invention;
FIG. 5 is a plan view illustrating a second insulating plate of FIG. 2 according to embodiments of the present invention;
FIG. 6 is an enlarged cross-sectional view illustrating a first insulating plate and a first electrode tab included in a secondary battery according to embodiments of the present invention;
FIG. 7 is a plan view illustrating the first insulating plate of FIG. 6 according to embodiments of the present invention;
FIG. 8 is an enlarged cross-sectional view illustrating a first insulating plate and a first electrode tab included in a secondary battery according to embodiments of the present invention;
FIG. 9 is a plan view illustrating the first insulating plate of FIG. 8 according to embodiments of the present invention;
FIG. 10 is a flowchart illustrating a method of fabricating a secondary battery according to embodiments of the present invention;
FIG. 11 is a flowchart illustrating a first insulating plate fabrication operation of FIG. 10 according to embodiments of the present invention;
FIG. 12 is a cross-sectional view illustrating a core portion that is fixedly inserted into a forming mold according to embodiments of the present invention;
FIG. 13 is a cross-sectional view illustrating a process of forming a through hole in the first insulating plate according to embodiments of the present invention;
FIG. 14 is a flowchart illustrating a first insulating plate fabrication operation of FIG. 10 according to embodiments of the present invention;
FIG. 15 is a cross-sectional view illustrating a core portion that is fixedly inserted into a forming mold according to embodiments of the present invention; and
FIG. 16 is a cross-sectional view illustrating a first insulating plate withdrawn from the forming mold according to embodiments of the present invention.

### DETAILED DESCRIPTION

Herein, some embodiments of the present invention will be described, in further detail, with reference to the accompanying drawings. The terms or words used in this specification and claims should not be construed as being limited to the usual or dictionary meaning and should be interpreted as meaning and concept consistent with the technical idea of the present invention based on the principle that the inventor can be his/her own lexicographer to appropriately define the concept of the term.

The embodiments described in this specification and the configurations shown in the drawings are provided as some example embodiments of the present invention and do not represent all of the technical ideas, aspects, and features of the present invention. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements. In addition, when a part is referred to as being "electrically coupled" to another part, the part may be directly electrically connected to another part or one or more intervening parts may be present therebetween such that the part and the another part are indirectly electrically connected to each other.In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present invention relates to "one or more embodiments of the present invention." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present invention and is not intended to be limiting of the present invention. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

When "C to D" is stated, it means C or more and D or less, unless otherwise specified.

The terms used in the present specification are for describing embodiments of the present invention and are not intended to limit the present invention.

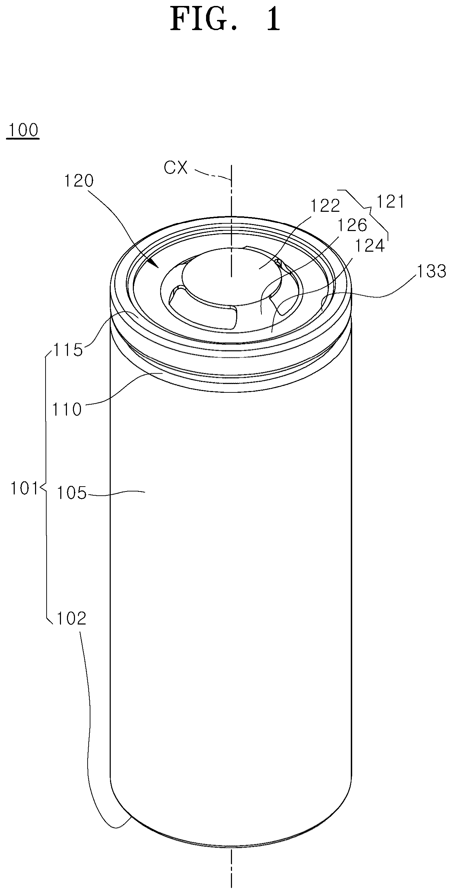

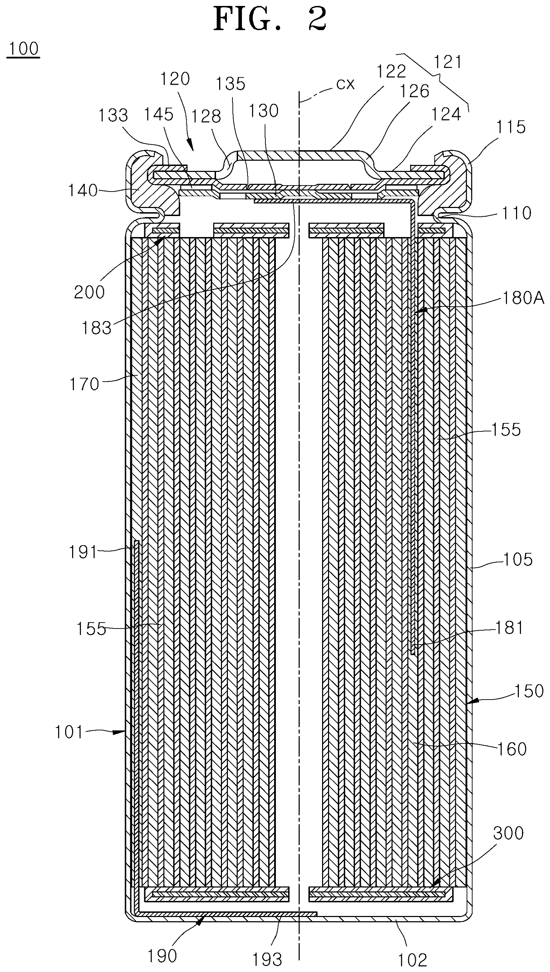

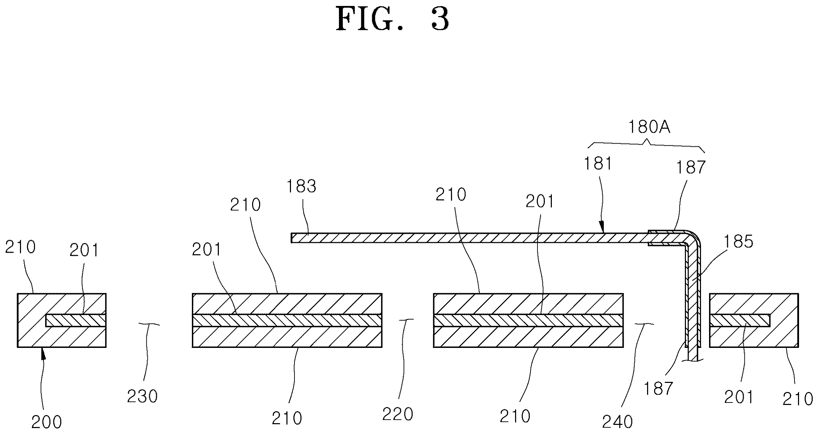

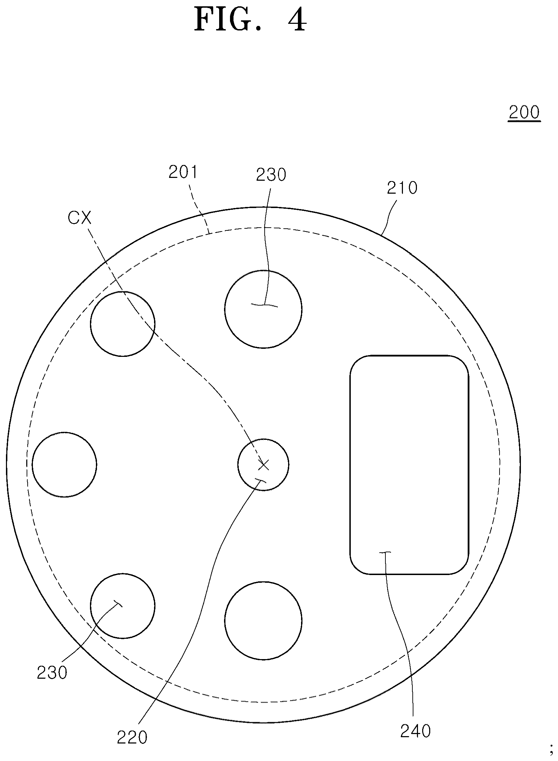

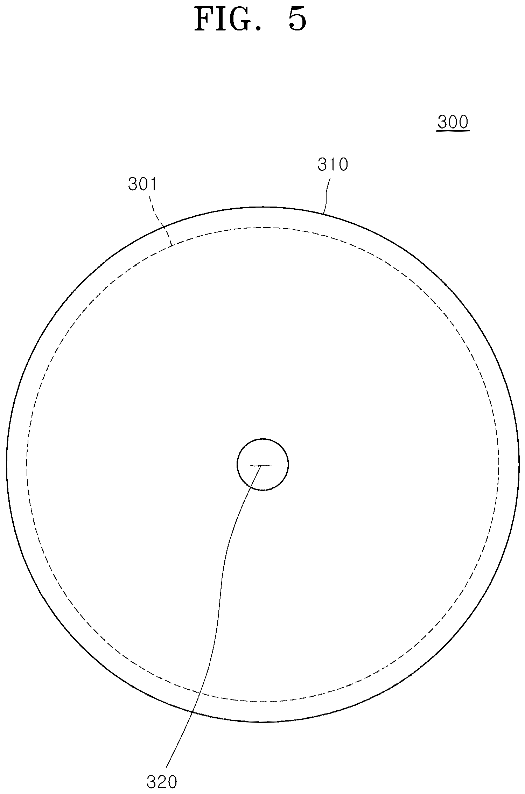

FIG. 1 is a perspective view illustrating a secondary battery, and FIG. 2 is a longitudinal sectional view illustrating the secondary battery. FIG. 3 is an enlarged cross-sectional view illustrating a first insulating plate and a first electrode tab of FIG. 2, and FIG. 4 is a plan view illustrating the first insulating plate of FIG. 3. FIG. 5 is a plan view illustrating a second insulating plate of FIG. 2.

Referring to FIGS. 1 to 5, a secondary battery 100 includes a case 101, an electrode assembly 150, and a first insulating plate 200. For example, the secondary battery 100 may be a cylindrical secondary battery.

The case 101 may include a bottom portion 102 in a substantially circular geometry and a sidewall portion 105 bent from an outer circumferential corner of the bottom portion 102 and extending parallel to an axis CX of the secondary battery 100. The axis CX may be a virtual line extending along a center of the secondary battery 100. A transversal cross section of the sidewall portion 105 may be an annular geometry around the axis CX. The case 101 may include steel, a steel alloy, steel plated with nickel, a steel alloy plated with nickel, aluminum, or an aluminum alloy.

The secondary battery 100 may include a cap assembly 120 which closes an opening that is open at one side of the case 101. The opening of the case 101 may allow the electrode assembly 150, the first insulating plate 200, and a second insulating plate 300 to be inserted into the case 101. The opening of the case 101 may be closed by the cap assembly 120. Before the opening of the case 101 is closed by the cap assembly 120, an electrolyte may be injected into the case 101. One side of the case 101 may indicate an upper side, and the other side of the case 101 may indicate a lower side.

The cap assembly 120 may seal the opening of the case 101 and protect the electrode assembly 150 from an external environment. When an internal pressure of the case 101 increases to or exceeds a reference pressure due to a thermal runaway or fire of the secondary battery 100, the cap assembly 120 may be ruptured and may discharge gas in the case 101 to the exterior environment. The cap assembly 120 may serve as a positive terminal.

The cap assembly 120 may include a vent plate 133. For example, the vent plate 133 may be electrically connected to a first electrode tab 180A. For example, the vent plate 133 may be electrically connected to a first electrode 160 through the first electrode tab 180A. For example, the vent plate 133 may serve as a terminal electrically connected to an external device. For example, the vent plate 133 may serve as a terminal of the first electrode 160.

The cap assembly 120 may include a cap-down 130 and/or an insulating member 145. The cap assembly 120 may include a cap-up 121. The cap-up 121 may serve as a terminal electrically connected to an external device. The cap-up 121 may serve as a positive electrode terminal. A vent hole 128 may be formed in the cap-up 121. The vent hole 128 may serve to discharge internal gas to the outside when an abnormal internal pressure occurs due to overcharging or the like in the case 101. The cap-up 121 may be fabricated of iron, an iron alloy, plated iron, a plated iron alloy, aluminum, or an aluminum alloy. The cap-up 121 may include an inner body 122, an outer body 124, and a bridge 126.

The inner body 122 may form an exterior of a central portion of the cap-up 121. The inner body 122 may be formed in substantially a disc geometry. The inner body 122 may be disposed such that a central axis of the inner body 122 matches the axis CX of the case 101.

The outer body 124 may form an exterior of an edge of the cap-up 121. The outer body 124 may be formed in a substantially hollow ring shape. A diameter of the outer body 124 may be greater than a diameter of the inner body 122. The outer body 124 may be coaxially disposed with the inner body 122. That is, a central axis of the outer body 124 may be disposed to match the axis CX of the inner body 122 and of the case 101.

The inner body 122 and the outer body 124 may have different heights. The outer body 124 may be disposed under the inner body 122. The inner body 122 and the outer body 124 may be disposed to be coplanar with each other.

The bridge 126 may be disposed between the inner body 122 and the outer body 124 and may support the inner body 122 with respect to the outer body 124. The bridge 126 may be formed in a rod geometry where both end portions are connected to an outer circumferential surface of the inner body 122 and an inner circumferential surface of the outer body 124. A plurality of bridges 126 may exist. The plurality of bridges 126 may be spaced a predetermined distance from each other or one another along a circumference of the case 101 around the axis CX. Distances between the adjacent bridges 126 may be substantially the same.

The vent hole 128 may be formed in a hole geometry passing through the cap-up 121. The vent hole 128 may be formed in a hole geometry passing through a region between the inner body 122 and the outer body 124. A plurality of vent holes 128 may exist. The plurality of vent holes 128 may be individually disposed between the adjacent bridges 126. The number of the vent holes 128 is not limited to a number illustrated in FIG. 1; the number may vary.

The vent plate 133 may be located under the cap-up 121. The vent plate 133 may be in close contact with, in contact with, coupled to, or connected to a lower portion of the cap-up 121. The vent plate 133 may be in close contact with, in contact with, coupled to, or connected to the central portion protruding upward from the cap-up 121, that is, an edge of the cap-up 121 excluding the inner body 122, that is, the outer body 124. An end portion of the vent plate 133 may curvedly extend to surround an end portion of the outer body 124. The vent plate 133 may be fabricated of aluminum or an aluminum alloy. Meanwhile, unlike as shown in FIGS. 1 and 2, when the vent plate 133 serves as a terminal of the first electrode 160, the end portion of the vent plate 133 may be curved downward. The vent plate 133 may include iron, iron alloy, plated iron, plated iron alloy, aluminum, or an aluminum alloy.

The vent plate 133 may include a notch 135. The notch 135 may be concavely formed in an outer surface of the vent plate 133 to have a predetermined depth. As an internal pressure of the secondary battery 100 increases to or exceeds the reference pressure or a rupture pressure of the vent plate 133 due to a thermal runaway or fire of the secondary battery 100, the notch 135 may be ruptured, and emission generated in the case 101 may sequentially pass through the notch 135 and the vent hole 128 and ultimately be discharged to the exterior environment. The emission discharge from the vent hole 128 may include flame, gas, and smoke.

The cap-down 130 may be disposed under the vent plate 133. The cap-down 130 may be in close contact with, in contact with, coupled to, or connected to the vent plate 133. The cap-down 130 may be electrically connected to the electrode assembly 150 through the first electrode tab 180A. The cap-down 130 may be electrically connected to the vent plate 133 and the cap-up 121.

The first electrode tab 180A may be welded to a lower surface of the cap-down 130. The lower surface of the cap-down 130 may be ultrasonic and/or laser welded to the first electrode tab 180A. The cap-down 130 may include aluminum or an aluminum alloy.

When a thermal runaway or fire occurs in the secondary battery 100, the vent plate 133 is deformed due to an internal pressure of the case 101, and the cap-down 130 and the vent plate 133 may be electrically separated from each other.

The insulating member 145 may be installed between the vent plate 133 and the cap-down 130. The insulating member 145 may be located between an edge of the vent plate 133 and an edge of the cap-down 130. The insulating member 145 may serve to insulate the cap-down 130 from the vent plate 133 when the vent plate 133 is deformed due to internal gas. The insulating member 145 may include a resin material such as polyethylene (PE), polypropylene (PP), or polyethylene terephthalate (PET), however, the material thereof is not limited thereto.

A gasket 140 may be disposed on an upper side of the case 101. The gasket 140 may be located between an end portion of the vent plate 133 surrounding the outer body 124 of the cap-up 121 and the case 101. An inner circumferential portion of the gasket 140 toward the axis CX may be in close contact with an outer circumferential portion of the vent plate 133, and an outer circumferential portion of the gasket 140 opposite to the axis CX may be in close contact with a beading portion 110 and an inner surface of a crimping portion 115.

The gasket 140 may serve to insulate the case 101 from the cap assembly 120. The gasket 140 may include a resin material such as PE, PP, or PET, however, the material thereof is not limited thereto.

The beading portion 110 and the crimping portion 115 may be included in the sidewall portion 105. The beading portion 110 may protrude between the first insulating plate 200 and the cap assembly 120 from one side of the sidewall portion 105 to insulate the cap assembly 120 from the first insulating plate 200. The beading portion 110 may be formed through a machining process such that one side of the sidewall portion 105 is folded to protrude toward the axis CX.

The crimping portion 115 may be disposed on the beading portion 110 and continuing from the beading portion 110. The crimping portion 115 may surround the cap assembly 120 to prevent the cap assembly 120 from being separated from the case 101. The crimping portion 115 may be formed through a machining process such that an end portion of one side of the sidewall portion 105 is bent inward toward the axis CX.

The electrode assembly 150 may function as a unit structure which performs power charging and discharging operations in the secondary battery 100.

The electrode assembly 150 may include first and second electrodes 160 and 170 and a separator 155. The first electrode 160 may be a positive electrode, and the second electrode 170 may be a negative electrode.

The first electrode 160 may be in the form of a thin film. The type, size, and shape of the first electrode 160 are not specifically limited as long as the first electrode 160 has conductivity without causing a detrimental chemical change to the secondary battery 100.

The first electrode 160 may include a positive substrate and a positive electrode active material layer stacked on at least one side surface of both side surfaces of the positive substrate. For example, the positive substrate may be a foil including aluminum or an aluminum alloy.

The first electrode 160 may include a positive electrode coating region which is coated with the positive electrode active material layer and a positive electrode non-coating region which is not coated with the positive electrode active material layer. A plurality of positive electrode coating regions and a plurality of positive electrode non-coating regions may exist. The plurality of positive electrode coating regions and the plurality of positive electrode non-coating regions may be alternately disposed in a longitudinal direction, in which the first electrode 160 extends, of the first electrode 160.

Both side surfaces of the positive electrode coating region may be coated with the positive electrode active material layer, or alternatively, only one side surface of the positive electrode coating region may be coated with the positive electrode active material layer.

The positive electrode active material layer may include a positive electrode active material. The positive electrode active material may include a reversible intercalation and deintercalation compound for lithium (i.e., a lithiated intercalation compound). The positive electrode active material may include a compound oxide of cobalt, manganese, nickel, iron, and a combination thereof and lithium.

The positive electrode active material may include lithium-iron-phosphorus oxide (LiFePO₄, LFP), lithium-manganese-iron-phosphorus oxide (LiMnFePO₄, LMFP), or lithium-nickel-cobalt-manganese oxide (LiNiₓCo_{y}Mn_{z}O₂, NCM). Here, 0<x<1, 0<y<1, 0<z<1, and x+y+z=1. The positive electrode active material may include only one of lithium-iron-phosphorus oxide (LiFePO₄, LFP), lithium-manganese-iron-phosphorus oxide (LiMnFePO₄, LMFP), or lithium-nickel-cobalt-manganese oxide (LiNiₓCo_{y}Mn_{z}O₂, NCM), or may include two or all of lithium-iron-phosphorus oxide (LiFePO₄, LFP), lithium-manganese-iron-phosphorus oxide (LiMnFePO₄, LMFP), and lithium-nickel-cobalt-manganese oxide (LiNiₓCo_{y}Mn_{z}O₂, NCM).

The positive electrode active material layer may include a positive electrode conductive material. The positive electrode conductive material ensures conductivity to the positive electrode active material layer. Any material that does not cause a detrimental chemical change and is electronically conductive may be used as the positive electrode conductive material. Non-limiting examples of the positive electrode conductive material may include a carbon-based material such as natural graphite, artificial graphite, carbon black, acetylene black, Ketjen black, carbon fiber, carbon nanofibers, and carbon nanotubes, a metal-based material in the form of a metal powder or metal fiber containing copper, nickel, aluminum, silver, or the like, a conductive polymer such as a polyphenylene derivative, or a mixture thereof.

The positive electrode active material layer may include a positive electrode binder. The positive electrode binder bonds particles constituting the positive electrode active material to one another. The positive electrode binder attaches the positive electrode active material to the first electrode 160.

A non-aqueous binder, an aqueous binder, a dry binder, or a combination thereof may be used as a non-limiting example of the positive electrode binder. The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include styrene-butadiene rubber, (meth)acrylated styrene-butadiene rubber, (meth)acrylonitrile-butadiene rubber, (meth)acrylic rubber, butyl rubber, fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When the aqueous binder is used as the positive electrode binder, the first active material layer may include a cellulose compound which provides viscosity. One or more of carboxymethyl cellulose, hydroxypropyl methyl cellulose, methyl cellulose, and alkaline metal salts thereof may be mixed and used as the cellulose compound. Na, K, or Li may be used as an alkaline metal.

The dry binder is a fibrous polymer material, and may include polytetrafluoroethylene, polyvinylidene fluoride, a polyvinylidene fluoride-hexafluoropropylene copolymer, polyethylene oxide, or a combination thereof.

The second electrode 170 may be in the form of a thin film. The second electrode 170 may be disposed to be spaced apart from and face the first electrode 160. The type, size, and shape of the second electrode 170 are not specifically limited as long as the second electrode 170 has conductivity without causing a detrimental chemical change to the secondary battery 100.

The second electrode 170 may include a negative substrate and a negative electrode active material layer stacked on at least one side surface of both side surfaces of the negative substrate. For example, the negative substrate may be a foil including copper, a copper alloy, nickel, or a nickel alloy.

The second electrode 170 may include a negative electrode coating region which is coated with a negative electrode active material layer and a negative electrode non-coating region which is not coated with the negative electrode active material layer. A plurality of negative electrode coating regions and a plurality of negative electrode non-coating regions may exist. The plurality of negative electrode coating regions and the plurality of negative electrode non-coating regions may be alternately disposed in a direction in which the second electrode 170 extends.

Both side surfaces of the negative electrode coating region may be coated with the negative electrode active material layer, or alternatively, only one side surface of the negative electrode coating region may be coated with the negative electrode active material layer.

The negative electrode active material layer may include a negative electrode active material. The negative electrode active material may include a material into which lithium ions may be reversibly intercalated and/or from which lithium ions may be reversibly deintercalated. The negative electrode active material layer may include a lithium metal, a lithium metal alloy, a material which may be doped in and undoped from lithium, or a transition metal oxide.

The material into which the lithium ions may be reversibly intercalated and/or from which lithium ions may be reversibly deintercalated may include a carbon-based negative electrode active material such as crystalline carbon, amorphous carbon, or a combination thereof. Non-limiting examples of the crystalline carbon may include graphite such as natural graphite or artificial graphite in amorphous, platy, flake, spherical, or fibrous form. Non-limiting examples of the amorphous carbon may include soft or hard carbon, mesophase pitch carbide, fired coke, or the like.

The lithium metal alloy may include Na, K, Rb, Cs, Fr, Be, Mg, Ca, Sr, Si, Sb, Pb, In, Zn, Ba, Ra, Ge, Al, or Sn.

The material which may be doped in and undoped from lithium may include a Si-based negative electrode active material or a Sn-based negative electrode active material. The Si-based negative electrode active material may include silicon, a silicon-carbon composite, SiOₓ (0<x<2), a Si-Q alloy (Q is selected from the group consisting of alkaline metals, alkaline earth metals, Group 13 elements, Group 14 elements (excluding Si), Group 15 elements, Group 16 elements, transition metals, rare earth elements, and combinations thereof), or a combination thereof. The Sn-based negative electrode active material may include Sn, SnO₂, a Sn-based alloy, or a combination thereof.

The silicon-carbon composite may include a composite of silicon and amorphous carbon. The silicon-carbon composite may include silicon particles coated with amorphous carbon. For example, the silicon-carbon composite may include secondary particles (cores) in which silicon primary particles are assembled and an amorphous carbon coating layer (shell) located on the surface of the secondary particles. The amorphous carbon may be located between the silicon primary particles so that, for example, the silicon primary particles may be coated with the amorphous carbon. The secondary particles may be dispersed and present in an amorphous carbon matrix.

The silicon-carbon composite may include crystalline carbon. For example, the silicon-carbon composite may include a core including crystalline carbon and silicon particles and an amorphous carbon coating layer located on the surface of the core.

The Si-based negative electrode active material or the Sn-based negative electrode active material may be used in combination with the carbon-based negative electrode active material.

The negative electrode active material layer may include a negative electrode conductive material and a negative electrode binder. The negative electrode conductive material ensures conductivity to the negative electrode active material layer. Any material that does not cause a detrimental chemical change and is electronically conductive may be used as the negative electrode conductive material. Non-limiting examples of the negative electrode conductive material may include a carbon-based material such as natural graphite, artificial graphite, carbon black, acetylene black, Ketjen black, carbon fiber, carbon nanofibers, and carbon nanotubes, a metal-based material in the form of a metal powder or metal fiber containing copper, nickel, aluminum, silver, and the like, a conductive polymer such as a polyphenylene derivative, or a mixture thereof.

The negative electrode binder attaches particles constituting the negative electrode active material to one another. The negative electrode binder attaches the negative electrode active material to the second electrode 170. A non-aqueous binder, an aqueous binder, a dry binder, or a combination thereof may be used as a non-limiting example of the negative electrode binder.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include styrene-butadiene rubber, (meth)acrylated styrene-butadiene rubber, (meth)acrylonitrile-butadiene rubber, (meth)acrylic rubber, butyl rubber, fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When the aqueous binder is used as the negative electrode binder, the negative electrode active material layer may include a cellulose compound providing viscosity. One or more of carboxymethyl cellulose, hydroxypropyl methyl cellulose, methyl cellulose, and alkaline metal salts thereof may be mixed and used as the cellulose compound. Na, K, or Li may be used as an alkaline metal.

The dry binder is a polymer material capable of being fiberized, and may include polytetrafluoroethylene, polyvinylidene fluoride, a polyvinylidene fluoride-hexafluoropropylene copolymer, polyethylene oxide, or a combination thereof.

The separator 155 may be interposed between the pair of electrode plates 160 and 170, that is, between the first electrode 160 and the second electrode 170. The separator 155 may allow the lithium ions to migrate between the first electrode 160 and the second electrode 170. The separator 155 may prevent a short circuit between the first electrode 160 and the second electrode 170.

The separator 155 may include polyethylene, polypropylene, polyvinylidene fluoride, or a multilayer film with two or more layers thereof. The separator 155 may include a mixed multilayer membrane such as a two-layer separator with polyethylene/polypropylene, a three-layer separator with polyethylene/polypropylene/polyethylene, or a three-layer separator with polypropylene/polyethylene/polypropylene.

The separator 155 may include a porous substrate and a coating layer located on one surface or both surfaces of the porous substrate. The separator 155 may include an organic material, an inorganic material, or a combination thereof.

The porous substrate may include polyolefins such as polyethylene and polypropylene, polyesters such as polyethylene terephthalate and polybutylene terephthalate, polyacetal, polyamide, polyimide, polycarbonate, polyetherketone, polyaryl etherketone, polyetherimide, polyamideimide, polybenzimidazole, polyethersulfone, polyphenylene oxide, cyclic olefin copolymers, polyphenylene sulfide, polyethylene naphthalate, glass fiber, Teflon, and polytetrafluoroethylene, or a polymer film including copolymers or a mixture of two or more thereof.

The organic material may include a polyvinylidene fluoride-based polymer or a (meth)acrylic-based polymer.

The inorganic material may include particles of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, or a combination thereof, but is not limited thereto.

The organic material and the inorganic material may be present as a mixture in one coating layer. The organic material and the inorganic material may be present in a form in which a coating layer including an organic material and a coating layer including an inorganic material are stacked.

The electrode assembly 150 may have a shape wound around the axis CX. Accordingly, the electrode assembly 150 may have substantially a jelly roll geometrye.

A pair of separators 155 may exist. The pair of separators 155 may be disposed to face both surfaces of the first electrode 160 or the second electrode 170. The pair of separators 155 may be wound along with the first electrode 160 and the second electrode 170.

The secondary battery 100 may include one or more first electrode tabs 180A. The first electrode tab 180A may electrically connect the first electrode 160 and the cap assembly 120. For example, the first electrode tab 180A may electrically connect the first electrode 160 and the cap-down 130 of the cap assembly 120.

However, the components of the secondary battery 100 are not limited thereto, and, for example, the secondary battery 100 may further include a first current collector plate. The first current collector plate may collect a current from the first electrode 160. The cap assembly 120 may be electrically connected to the first electrode tab 180A through the first current collector plate. Accordingly, the cap assembly 120 may be electrically connected to the first electrode 160.

The secondary battery 100 may include one or more second electrode tabs 190. The second electrode tab 190 may electrically connect the second electrode 170 and the case 101. For example, the second electrode tab 190 may electrically connect the second electrode 170 and the bottom portion 102 of the case 101.

However, the components of the secondary battery 100 are not limited thereto. For example, the secondary battery 100 may further include a second current collector plate. The second current collector plate may collect a current from the second electrode 170. The case 101 may be electrically connected to the second electrode tab 190 through the second current collector plate, or the case 101 may also be directly connected to the second current collector plate. Accordingly, the case 101 may be electrically connected to the second electrode 170.

The secondary battery 100 may include one or more first electrode tabs 180A and one or more second electrode tabs 190. The first insulating plate 200 is located in the case 101 and outside the electrode assembly 150. For example, the first insulating plate 200 is interposed between one side of the electrode assembly 150 and the cap assembly 120 to prevent a short circuit between the electrode assembly 150 and the cap assembly 120. In FIGS. 1 and 2, one side of the electrode assembly 150 indicates the upper side.

The first insulating plate 200 includes a core portion 201 and an insulating portion 210. The core portion 201 may have substantially a disc geometry and include a metal material. For example, the metal material of the core portion 201 may include stainless steel, aluminum, or copper. For example, the metal material may include an aluminum alloy or a copper alloy such as brass or bronze.

The insulating portion 210 may surround the core portion 201. The insulating portion 210 may include an insulating material. For example, the insulating material may include a synthetic resin of PP, PE, or PET.

The insulating portion 210 has lower rigidity than the core portion 201. For example, when the core portion 201 is formed of stainless steel, a tensile strength of the core portion 201 may be greater than about 400 N/mm². However, when the insulating portion 210 is formed of PP, a tensile strength thereof may be about 48 N/mm².

A planar shape of the first insulating plate 200 may be circular to be interposed in the sidewall portion 105. A diameter of the core portion 201 may be less than a diameter of the insulating portion 210. For example, a circle illustrated with a dotted line in FIG. 4 may indicate a boundary of an outer circumferential corner of the core portion 201.

Because the first insulating plate 200 includes the core portion 201 having greater rigidity than the insulating portion 210 therein, the deformation of the first insulating plate 200 is suppressed in the case 101. Accordingly, the expansion of the electrode assembly 150 and the rising of the electrode assembly 150 toward the cap assembly 120 may be suppressed to prevent a short circuit between the cap assembly 120 and the electrode assembly 150.

The first insulating plate 200 may include one or more through holes (for example, through holes 220, 230, and 240) formed to pass through the first insulating plate 200 in a thickness direction. For example, the first insulating plate 200 may include a plurality of through holes (for example, the through holes 220, 230, and 240). One or more through holes (for example, the through holes 220, 230, and 240) may include at least one of one or more first through holes 220, one or more second through holes 230, and one or more third through holes 240.

For example, one or more through holes may include the first through hole 220. The first through hole 220 may be formed in a central portion of the first insulating plate 200. The first through hole 220 may be formed to pass through the first insulating plate 200. For example, as illustrated in FIG. 4, a planar geometry of the first through hole 220 may be substantially circular but is not limited thereto. For example, the first through hole 220 may be formed in various geometries such as a substantially quadrangular planar geometry.

For example, one or more through holes may include the second through hole 230. The second through hole 230 may be formed in the first insulating plate 200 excluding the central portion thereof. For example, as illustrated in FIG. 4, a planar geometry of the second through hole 230 may be substantially circular but is not limited thereto. For example, the second through hole 230 may be formed in various geometries such as a substantially quadrangular planar geometry.

For example, one or more through holes may include the third through hole 240. The third through hole 240 may be formed in the first insulating plate 200 excluding the central portion thereof. A size and/or shape of the third through hole 240 may be different from that of the second through hole 230. For example, as illustrated in FIG. 4, the planar geometry of the third through hole 240 may be substantially quadrangular, for example, a quadrangular geometry with rounded corners. However, the planar geometry of the third through hole 240 is not limited thereto. For example, the third through hole 240 may be formed in various geometries such as a substantially circular planar geometry. The electrolyte injected into the case 101 may smoothly move toward the electrode assembly 150 through the plurality of through holes 220, 230, and 240.

The plurality of through holes 220, 230, and 240 may be formed through a punching process. As illustrated in FIG. 3, the core portion 201 may be exposed at inner surfaces of the through holes 220, 230, and 240.

The first electrode tab 180A electrically connecting the electrode assembly 150 and the cap assembly 120 may pass through one through hole 240 of the plurality of through holes 220, 230, and 240. For example, the first electrode tab 180A may pass through the third through hole 240.

The core portion 201 may be formed of a metal material which is a conductive material. Accordingly, when the first electrode tab 180A is formed of only a conductive material, the first electrode tab 180A and the core portion 201 exposed at the inner surface of the third through hole 240 may be in contact with each other, and a short circuit may occur therebetween.

In order to prevent such a short circuit, the first electrode tab 180A may include a tab core portion 181 including a conductive material and an insulating sheath 187 surrounding an outer circumferential surface of the tab core portion 181 and including an insulating material.

The tab core portion 181 may include one end portion welded to a non-coating portion of the first electrode 160, the other end portion 183 welded to the cap-down 130 of the cap assembly 120, and an insulating plate passing portion 185 connecting one end portion and the other end portion 183 and passing through the third through hole 240.

The insulating sheath 187 may surround the insulating plate passing portion 185. An insulating member may be wound around an outer surface of the tab core portion 181 along a spiral trajectory to form the insulating sheath 187.

The secondary battery 100 may include the second insulating plate 300. The second insulating plate 300 may be located in the case 101 and outside the other side of the electrode assembly 150. As illustrated in FIG. 2, the second insulating plate 300 may be interposed between the other side of the electrode assembly 150 and the bottom portion 102 to prevent a short circuit between the electrode assembly 150 and the bottom portion 102.

Similar to the first insulating plate 200, the second insulating plate 300 may include a core portion 301 and an insulating portion 310 which has lower rigidity than the core portion 301 and includes an insulating material. The second insulating plate 300 may include a central through hole 320 passing through the second insulating plate 300 in a thickness direction and formed in a central portion of the second insulating plate 300. The through hole formed in the second insulating plate may be eccentrically and biasedly located without being located in the central portion. The through hole may include one or more through holes, and a shape of the through hole is not specifically limited, and is, for example, a circular, polygonal, or arc shape.

Meanwhile, a second insulating plate may be formed of only an insulating material without including a core portion.

The second electrode tab 190 may include one end portion 191 welded to a non-coating portion of the second electrode 170 and the other end portion 193 welded to the bottom portion 102 of the case 101. The second electrode tab 190 may pass between an outer surface of the second insulating plate 300 and the sidewall portion 105 and electrically connect the second electrode 170, the electrode assembly 150, and the bottom portion 102. Meanwhile, unlike the second electrode tab illustrated in FIG. 2, a second electrode tab may pass through a through hole formed in a second insulating plate and may be connected to a bottom portion 102.

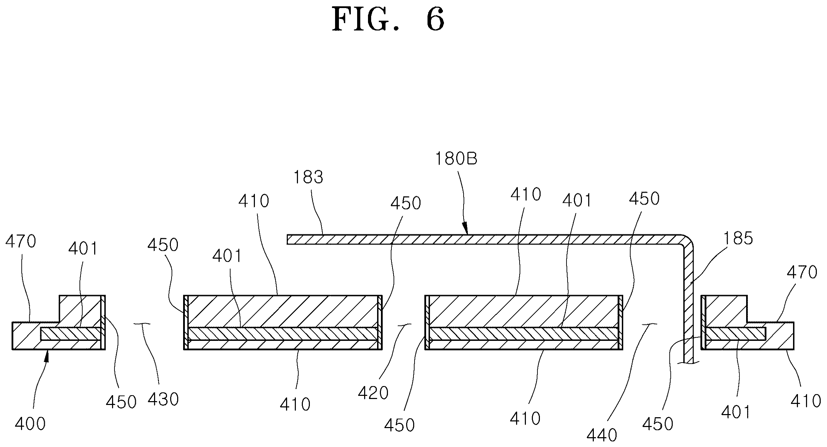

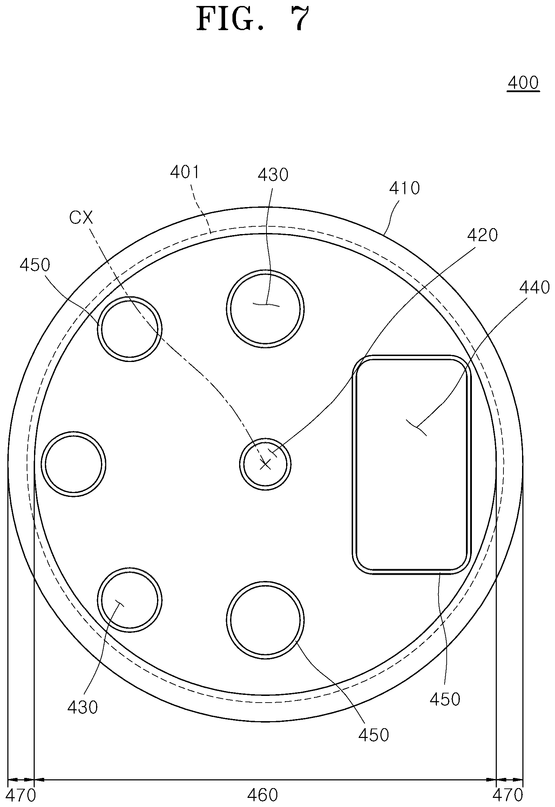

FIG. 6 is an enlarged cross-sectional view illustrating a first insulating plate and a first electrode tab included in a secondary battery, and FIG. 7 is a plan view illustrating the first insulating plate of FIG. 6.

Referring to FIGS. 2, 6, and 7, the secondary battery may include a case 101, an electrode assembly 150, a cap assembly 120, a first insulating plate 400, a second insulating plate 300, a first electrode tab 180B, and a second electrode tab 190.

The first insulating plate 400 is located in the case 101 and outside the electrode assembly 150. For example, the first insulating plate 400 is interposed between one side of the electrode assembly 150 and the cap assembly 120 to prevent a short circuit between the electrode assembly 150 and the cap assembly 120.

The first insulating plate 400 includes a core portion 401 and an insulating portion 410. The core portion 401 may have substantially a disc geometry and include a metal material. For example, the metal material of the core portion 401 may include stainless steel, aluminum, or copper.

The insulating portion 410 may surround the core portion 401. The insulating portion 410 may include an insulating material. For example, the insulating material may include a synthetic resin of PP, PE, or PET. The insulating portion 410 has lower rigidity than the core portion 401.

A planar geometry of the first insulating plate 400 may be substantially circular to be interposed in a sidewall portion 105. A diameter of the core portion 401 may be less than a diameter of the insulating portion 410. For example, a circle illustrated with a dotted line in FIG. 7 may indicate a boundary of an outer circumferential corner of the core portion 401.

Because the first insulating plate 400 includes the core portion 401 having greater rigidity than the insulating portion 410 therein, the deformation of the first insulating plate 400 is suppressed in the case 101. Accordingly, the expansion of the electrode assembly 150 and the rising of the electrode assembly 150 toward the cap assembly 120 may be suppressed to prevent a short circuit between the cap assembly 120 and the electrode assembly 150.

The first insulating plate 400 may include one or more through holes (for example, through holes 420, 430, and 440) formed to pass through the first insulating plate 400 in a thickness direction. For example, the first insulating plate 400 may include a plurality of through holes (for example, the through holes 420, 430, and 440). One or more through holes (for example, the through holes 420, 430, and 440) may include at least one or more first through holes 420, one or more second through holes 430, and one or more third through holes 440.

For example, one or more through holes may include the first through hole 420. The first through hole 420 may be formed in a central portion of the first insulating plate 400. The first through hole 420 may be formed to pass through the first insulating plate 400. For example, as illustrated in FIGS. 6 and 7, a planar geometry of the first through hole 420 may be substantially circular, but the planar geometry of the first through hole 420 is not limited thereto. For example, the first through hole 420 may be formed in various geometries such as a substantially quadrangular planar geometry.

For example, one or more through holes may include the second through hole 430. The second through hole 430 may be formed in the first insulating plate 400 excluding the central portion thereof. For example, as illustrated in FIGS. 6 and 7, a planar geometry of the second through hole 430 may be substantially circular, but the planar geometry of the second through hole 430 is not limited thereto. For example, the second through hole 430 may be formed in various geometries such as a substantially quadrangular planar geometry.

For example, one or more through holes may include the third through hole 440. The third through hole 440 may be formed in the first insulating plate 400 excluding the central portion thereof. A size and/or shape of the third through hole 440 may be different from that of the second through hole 430. For example, as illustrated in FIGS. 6 to 7, a planar shape of the third through hole 440 may be a substantially quadrangular shape, for example, a quadrangular shape with rounded corners. However, the planar shape of the third through hole 440 is not limited thereto. For example, the third through hole 440 may be formed in various geometries such as a substantially circular planar geometry. An electrolyte injected into the case 101 may smoothly move toward the electrode assembly 150 through the plurality of through holes 420, 430, and 440.

The plurality of through holes 420, 430, and 440 may be formed through a punching process. The first insulating plate 400 may include an inner insulating layer 450 such that the core portion 401 is not exposed at inner surfaces of the through holes 420, 430, and 440. The inner surfaces of the through holes 420, 430, and 440 may be coated with an insulating member to form the inner insulating layer 450.

The first electrode tab 180B electrically connecting the electrode assembly 150 and the cap assembly 120 may include a conductive material and pass through one through hole 440 of the plurality of through holes 420, 430, and 440. For example, the first electrode tab 180B may pass through the third through hole 440.

The first electrode tab 180B may include one end portion welded to a non-coating portion of a first electrode 160, the other end portion 183 welded to a cap-down 130 of the cap assembly 120, and an insulating plate passing portion 185 connecting one end portion and the other end portion 183 and passing through the third through hole 440. Because the inner insulating layer 450 is stacked on the inner surface of the third through hole 440, a short circuit between the first electrode tab 180B and the core portion 401 cannot occur.

The first insulating plate 400 may include a central portion 460 and an annular outer circumferential portion 470. The central portion 460 may have a circular planar geometry and a uniform thickness. The annular outer circumferential portion 470 may have a step configuration with and continue from an outer circumference of the central portion 460 and may have a greater thickness than the central portion 460.

When the crimping portion 115 is processed to be bent such that the cap assembly 120 is coupled to the case 101, the cap assembly 120 presses a beading portion 110 toward the electrode assembly 150, and accordingly, the beading portion 110 may press the first insulating plate 400 toward the electrode assembly 150.

The annular outer circumferential portion 470 may be pressed toward the electrode assembly 150 by the beading portion 110. Because the thickness of the annular outer circumferential portion 470 is less than the thickness of the central portion 460, when the beading portion 110 presses the annular outer circumferential portion 470, an amount of deformation of the first insulating plate 400 due to a force thereof may not be large, and an amount of rising deformation of the central portion 460 as a reaction to an amount of deformation of the annular outer circumferential portion 470, which is compressed downward, may decrease.

Because a radius of the core portion 401 is greater than a radius of a boundary between the central portion 460 and the annular outer circumferential portion 470 around an axis CX, even when the annular outer circumferential portion 470 is pressed by the beading portion 110, the amount of deformation of the annular outer circumferential portion 470 and the central portion 460 may be further decreased. Because the deformation of the first insulating plate 400 is suppressed in the case 101, a short circuit can be suppressed in the secondary battery, and the durability of the secondary battery can be improved.

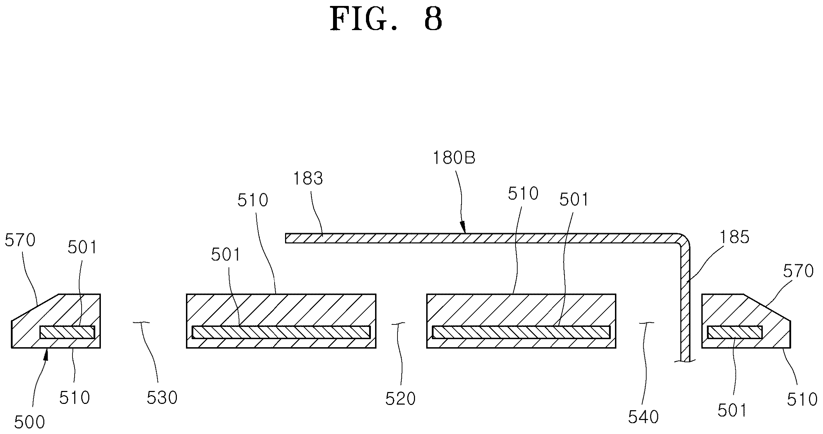

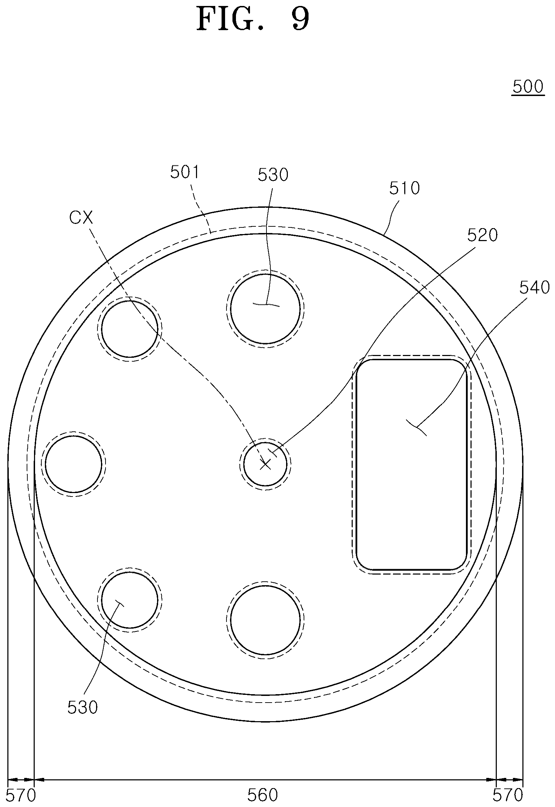

FIG. 8 is an enlarged cross-sectional view illustrating a first insulating plate and a first electrode tab included in a secondary battery, and FIG. 9 is a plan view illustrating the first insulating plate of FIG. 8.

Referring to FIGS. 1, 2, 8, and 9, the secondary battery may include a case 101, an electrode assembly 150, a cap assembly 120, a first insulating plate 500, a second insulating plate 300, a first electrode tab 180B, and a second electrode tab 190.

The first insulating plate 500 is located in the case 101 and outside the electrode assembly 150. For example, the first insulating plate 500 is interposed between one side of the electrode assembly 150 and the cap assembly 120 to prevent a short circuit between the electrode assembly 150 and the cap assembly 120.

The first insulating plate 500 includes a core portion 501 and an insulating portion 510. The core portion 501 may have substantially a disc geometry and include a metal material. For example, the metal material of the core portion 501 may include stainless steel, aluminum, or copper.

The insulating portion 510 may surround the core portion 501. The insulating portion 510 may include an insulating material. For example, the insulating material may include a synthetic resin of PP, PE, or PET. The insulating portion 510 has lower rigidity than the core portion 501.

A planar geometry of the first insulating plate 500 may be substantially circular to be interposed in a sidewall portion 105. A diameter of the core portion 501 may be less than a diameter of the insulating portion 510. For example, a circle illustrated with a dotted line in FIG. 9 may indicate a boundary of an outer circumferential corner of the core portion 501.

Because the first insulating plate 500 includes the core portion 501 having greater rigidity than the insulating portion 510 therein, the deformation of the first insulating plate 500 is suppressed in the case 101. Accordingly, the expansion of the electrode assembly 150 and the rising of the electrode assembly 150 toward the cap assembly 120 may be suppressed to prevent a short circuit between the cap assembly 120 and the electrode assembly 150.

The first insulating plate 500 may include one or more through holes (for example, through holes 520, 530, and 540) formed to pass through the first insulating plate 500 in a thickness direction. For example, the first insulating plate 500 may include a plurality of through holes (for example, the through holes 520, 530, and 540). One or more through holes (for example, the through holes 520, 530, 540) may include at least one or more first through holes 520, one or more second through holes 530, and one or more third through holes 540.

For example, one or more through holes may include the first through hole 520. The first through hole 520 may be formed in a central portion of the first insulating plate 500. The first through hole 520 may be formed to pass through the first insulating plate 500. For example, as illustrated in FIGS. 8 and 9, a planar geometry of the first through hole 520 may be substantially circular, but the planar shape of the first through hole 520 is not limited thereto. For example, the first through hole 520 may be formed in various geometries such as a substantially quadrangular planar geometry.

For example, one or more through holes may include the second through hole 530. The second through hole 530 may be formed in the first insulating plate 500 excluding the central portion thereof. For example, as illustrated in FIGS. 8 and 9, a planar geometry of the second through hole 530 may be substantially circular, but the planar geometry of the second through hole 530 is not limited thereto. For example, the second through hole 530 may be formed in various geometries such as a substantially quadrangular planar geometry.

For example, one or more through holes may include the third through hole 540. The third through hole 540 may be formed in the first insulating plate 500 excluding the central portion thereof. A size and/or geometry of the third through hole 540 may be different form that of the second through hole 530. For example, as illustrated in FIGS. 8 and 9, a planar geometry of the third through hole 540 may be substantially quadrangular, for example, a quadrangular geometry with rounded corners. However, the planar geometry of the third through hole 540 is not limited thereto. For example, the third through hole 540 may be formed in various geometries such as a circular planar geometry. An electrolyte injected into the case 101 may smoothly move toward the electrode assembly 150 through the plurality of through holes 520, 530, and 540.

The core portion 501 may be buried in the insulating portion 510 such that core portion 501 is not exposed at inner surfaces of the plurality of through holes 520, 530, and 540.

The first electrode tab 180B electrically connecting the electrode assembly 150 and the cap assembly 120 may include a conductive material and pass through one through hole 540 of the plurality of through holes 520, 530, and 540. For example, the first electrode tab 180B may pass through the third through hole 540.

The first electrode tab 180B may include one end portion welded to a non-coating portion of a first electrode 160, the other end portion 183 welded to a cap-down 130 of the cap assembly 120, and an insulating plate passing portion 185 connecting one end portion and the other end portion 183 and passing through the third through hole 540. Because the core portion 501 is not exposed at the inner surface of the third through hole 540, a short circuit between the first electrode tab 180B and the core portion 501 cannot occur.

The first insulating plate 500 may include a central portion 560 and an annular outer circumferential portion 570. The central portion 560 may have a substantially circular planar geometry and a uniform thickness. The annular outer circumferential portion 570 may continue from an outer circumference of the central portion 560 and may be inclined such that a thickness of the annular outer circumferential portion 570 decreases in a radial direction from an axis CX of the first insulating plate 500.

When the crimping portion 115 is processed to be bent such that the cap assembly 120 is coupled to the case 101, the cap assembly 120 presses a beading portion 110 toward the electrode assembly 150, and accordingly, the beading portion 110 may press the first insulating plate 500 toward the electrode assembly 150.

The annular outer circumferential portion 570 may be pressed toward the electrode assembly 150 by the beading portion 110. Since the annular outer circumferential portion 570 is tapered such that the thickness of the annular outer circumferential portion 570 becomes less than the thickness of the central portion 560, when the beading portion 110 presses the annular outer circumferential portion 570, deformation of the first insulating plate 500 due to a force thereof may not be significant, and an amount of rising deformation of the central portion 560 as a reaction to an amount of deformation of the annular outer circumferential portion 570, which is compressed downward, may decrease.

Because a radius of the core portion 501 is greater than a radius of a boundary between the central portion 560 and the annular outer circumferential portion 570 around the axis CX, even when the annular outer circumferential portion 570 is pressed by the beading portion 110, an amount of deformation of the annular outer circumferential portion 570 and the central portion 560 may be further decreased. Because the deformation of the first insulating plate 500 is suppressed in the case 101, a short circuit can be suppressed in the secondary battery, and the durability of the secondary battery can be improved.

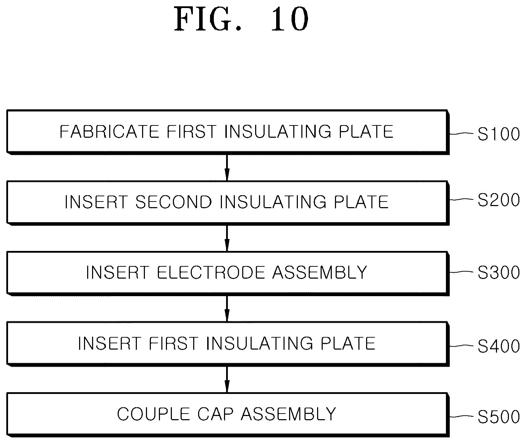

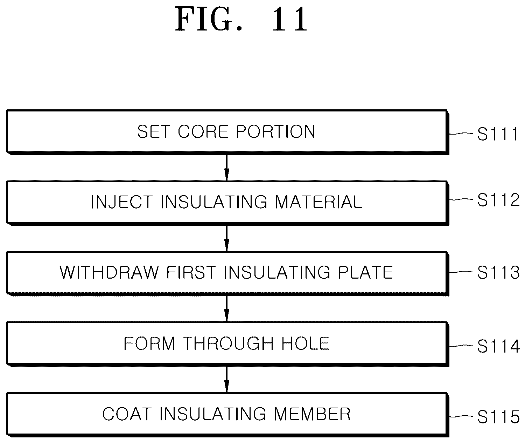

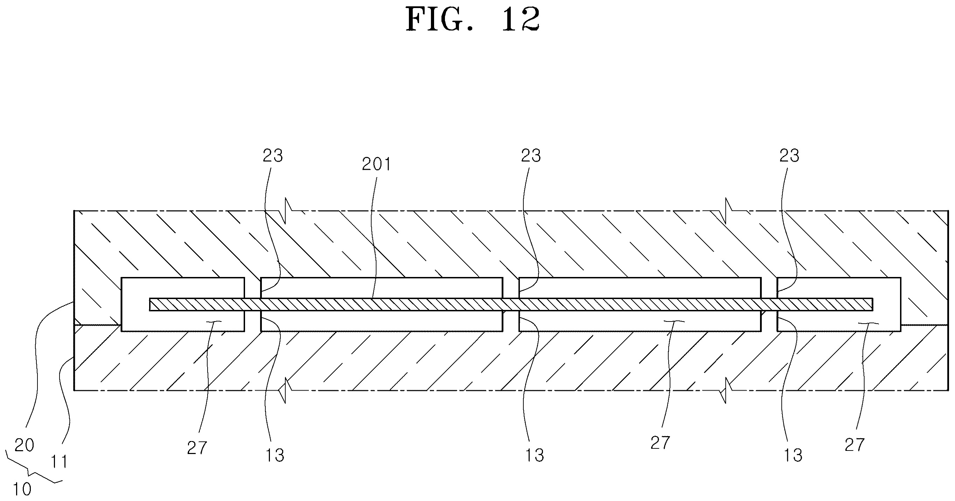

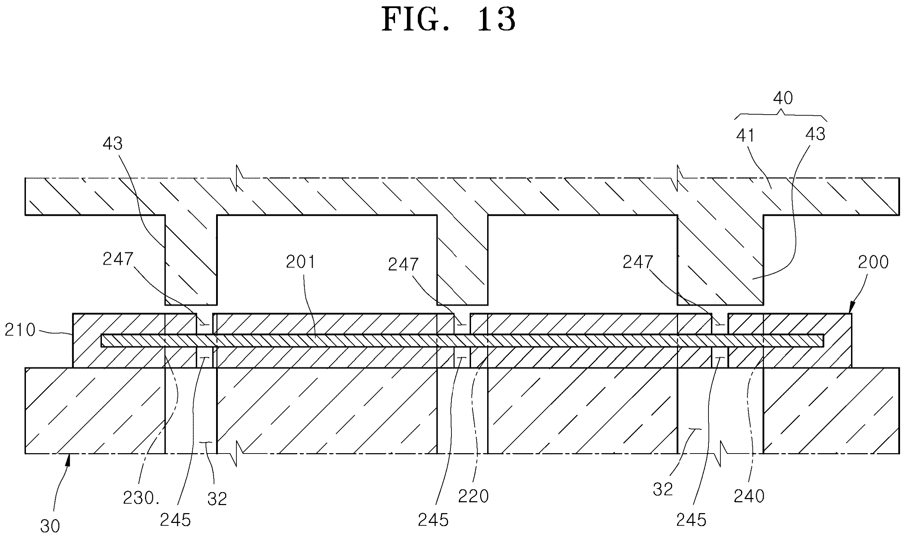

FIG. 10 is a flowchart illustrating a method of fabricating a secondary battery, and FIG. 11 is a flowchart illustrating a first insulating plate fabrication operation of FIG. 10. FIG. 12 is a cross-sectional view illustrating a core portion that is fixedly inserted into a forming mold, and FIG. 13 is a cross-sectional view illustrating a process of forming a through hole in the first insulating plate.

Referring to FIGS. 1 to 4 and 10 to 13, the method of fabricating a secondary battery may include a first insulating plate fabrication operation S100, a second insulating plate insertion operation S200, an electrode assembly insertion operation S300, a first insulating plate insertion operation S400, and a cap assembly coupling operation S500. The secondary battery 100 may be fabricated through the method of fabricating a secondary battery illustrated in FIG. 10.

The first insulating plate fabrication operation S100 is an operation of fabricating a core portion 201 and a first insulating plate 200 having lower rigidity than the core portion 201, including an insulating material, and surrounding the core portion 201.

The electrode assembly insertion operation S300 is an operation of inserting an electrode assembly 150 into a case 101 through an opening that is open at one side of the case 101. The first insulating plate insertion operation S400 is an operation of inserting the first insulating plate 200 into the case 101 through the opening of one side of the case 101 after the electrode assembly insertion operation S300 is performed.

The cap assembly coupling operation S500 is an operation of coupling a cap assembly 120 to the case 101 to close the opening of one side of the case 101 after the first insulating plate insertion operation S400 is performed.

The second insulating plate insertion operation S200 may be performed before the electrode assembly insertion operation S300 is performed. The second insulating plate insertion operation S200 is an operation of inserting a second insulating plate 300 including an insulating material into the case 101 through the opening of one side of the case 101. The second insulating plate 300, the electrode assembly 150, and the first insulating plate 200 may be sequentially inserted into the case 101 such that the first insulating plate 200 is located outside one side of the electrode assembly 150 and the second insulating plate 300 is located outside the other side of the electrode assembly 150 in the case 101.

The first insulating plate fabrication operation S100 may include a core portion setting operation S111, an insulating material injection operation S112, a first insulating plate withdrawal operation S113, a through hole forming operation S114, and an insulating member coating operation S115.

The core portion setting operation S111 is an operation of inserting the core portion 201 into a forming mold 10 and fixing the core portion 201 in the forming mold 10. The forming mold 10 may include a lower mold 11 and a upper mold 20 which may come into close contact with each other. When the lower mold 11 and the upper mold 20 are in close contact with each other, a cavity 27 corresponding to a shape of the first insulating plate 200 before through holes 220, 230, and 240 are formed may be formed in the forming mold 10.

When the lower mold 11 is separated from the upper mold 20, the core portion 201 is supported by one of the lower mold 11 and the upper mold 20, and when the lower mold 11 and the upper mold 20 are in close contact with each other, the core portion 201 may be fixedly inserted into the forming mold 10 not to move in the cavity 27.

The lower mold 11 and the upper mold 20 may include fixing protrusions 13 and 23 which press and hold the core portion 201 not to move when the lower mold 11 and the upper mold 20 are in close contact with each other. The fixing protrusions 13 and 23 may be provided at points overlapping a region in which the through holes 220, 230, and 240 are formed in the first insulating plate 200.

The insulating material injection operation S112 is an operation of injecting an insulating material into the cavity 27 of the forming mold 10 and curing the insulating material to form an insulating portion 210. The first insulating plate withdrawal operation S113 is an operation of separating the lower mold 11 from the upper mold 20 and withdrawing the first insulating plate 200 including the core portion 201 and the insulating portion 210 from the forming mold 10.

The through hole forming operation S114 is an operation of forming a plurality of through holes 220, 230, and 240, which pass through the first insulating plate 200 in a thickness direction, in the first insulating plate 200.

For example, the through hole forming operation S114 may include a punching operation. The punching operation may include an operation of loading the first insulating plate 200, in which the plurality of through holes 220, 230, and 240 are not formed yet, on a die 30 and an operation of punching the first insulating plate 200 using a punching mold 40 to form the plurality of through holes 220, 230, and 240.

The punching mold 40 may include a base 41 and a punching tool 43 protruding from the base 41 toward the die 30. A scrap discharge port 32 corresponding one-to-one to the punching tool 43 may be formed in the die 30. The punching tool 43 may punch the first insulating plate 200, and scraps separated from the first insulating plate 200 may be discharged through the scrap discharge port 32.

Holes 245 and 247 which are not filled with the insulating material due to the fixing protrusions 13 and 23 in the insulating material injection operation S112 may be included in the scraps separated by the punching tool 43 from the first insulating plate 200 and discharged.

The insulating member coating operation S115 is an operation of coating inner surfaces of the through holes 220, 230, and 240 with an insulating member to form an inner insulating layer 450 (see FIGS. 6 and 7).

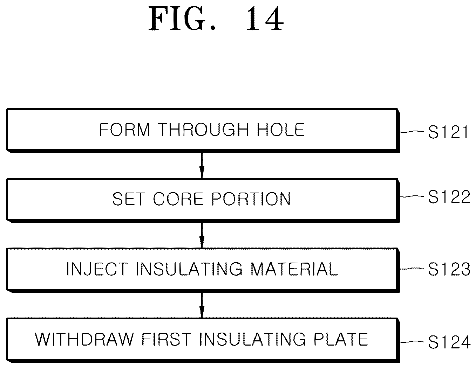

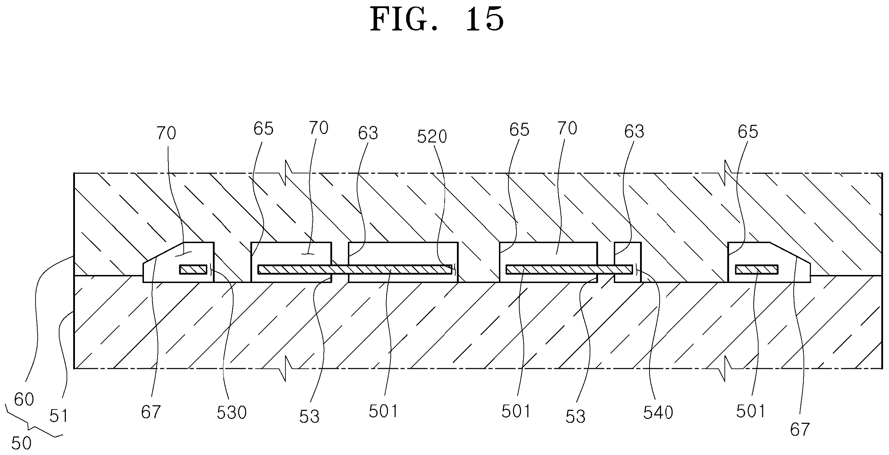

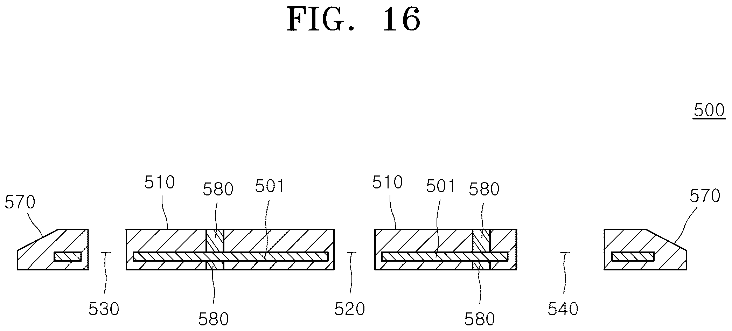

FIG. 14 is a flowchart illustrating the first insulating plate fabrication operation of FIG. 10, FIG. 15 is a cross-sectional view illustrating a core portion that is fixedly inserted into a forming mold, and FIG. 16 is a cross-sectional view illustrating a first insulating plate withdrawn from the forming mold.

A first insulating plate fabrication operation S100 may include a through hole forming operation S121, a core portion setting operation S122, an insulating material injection operation S123, and a first insulating plate withdrawal operation S124.

The through hole forming operation S121 is an operation of forming a plurality of through holes 520, 530, and 540 passing through a core portion 501 in a thickness direction in the core portion 501. For example, the plurality of through holes 520, 530, and 540 may be formed in the core portion 501 through a punching operation.

The core portion setting operation S122 is an operation of inserting the core portion 501 in which the plurality of through holes 520, 530, and 540 are formed into a forming mold 50 and fixing the core portion 501 in the forming mold 50.

The forming mold 50 may include a lower mold 51 and a upper mold 60 which may come into close contact with each other. When the lower mold 51 and the upper mold 60 are in close contact with each other, a cavity 70 corresponding to the shape of a first insulating plate 500 may be formed in the forming mold 50.

When the lower mold 51 and the upper mold 60 are separated from each other, the core portion 501 is supported by one of the lower mold 51 and the upper mold 60, and when the lower mold 51 and the upper mold 60 are in close contact with each other, the core portion 501 may be fixedly inserted into the forming mold 50 not to move in the cavity 70.

The lower mold 51 and the upper mold 60 may include fixing protrusions 53 and 63 which press and hold the core portion 501 not to move when the lower mold 51 and the upper mold 60 are in close contact with each other. The upper mold 60 may further include a plurality of hole passing protrusions 65 passing through the plurality of through holes 520, 530, and 540 and in close contact with the lower mold 51 when the upper mold 60 is in close contact with the lower mold 51. The plurality of hole passing protrusions 65 may be provided to correspond one-to-one to the plurality of through holes 520, 530, and 540.

Meanwhile, a lower mold may include a plurality of hole passing protrusions passing through a plurality of through holes 520, 530, and 540 formed in a core portion 501 and in close contact with a upper mold.

The upper mold 60 may include an inclined surface 67 such that the first insulating plate 500 has an annular outer circumferential portion 570.

The insulating material injection operation S123 is an operation of injecting an insulating material into the cavity 70 in the forming mold 50 and curing the insulating material to form an insulating portion 510. The insulating portion 510 may cover the core portion 501 such that the plurality of through holes 520, 530, and 540 formed in the core portion 501 are not closed. The core portion 501 may be covered by the insulating portion 510 not to be exposed at inner surfaces of the plurality of through holes 520, 530, and 540.

The first insulating plate withdrawal operation S124 is an operation of separating the lower mold 51 from the upper mold 60 and withdrawing the first insulating plate 500 including the core portion 501 and the insulating portion 510 from the forming mold 50.

An insulating insertion body 580 formed of an insulating material may be inserted into and fill holes which are not yet filled with the insulating material due to the fixing protrusions 53 and 63 in the insulating material injection operation S123. For example, the insulating material of the insulating insertion body 580 may be a synthetic resin or insulating tape.

Because a core portion having high rigidity is included in a first insulating plate, the deformation of the first insulating plate is suppressed in a case. Accordingly, the expansion of an electrode assembly and the rising of the electrode assembly toward a cap assembly are suppressed, thereby preventing a short circuit between the cap assembly and the electrode assembly.

## Claims

1. A secondary battery (100) comprising:
a case (101);
an electrode assembly (150) accommodated within the case (101); and
a first insulating plate (200, 400, 500) located exterior to the electrode assembly (150), the first insulating plate (200, 400, 500) comprising a core portion (201, 401, 501) and an insulating portion (210, 410, 510), the insulating portion (210, 410, 510) having a rigidity less than a rigidity of the core portion (201, 401, 501), the insulating portion (210, 410, 510) comprising an insulating material, the insulating portion (210, 410, 510) surrounding the core portion (201, 401, 501).

2. The secondary battery (100) according to claim 1, wherein the core portion (201, 401, 501) comprises a metal.

3. The secondary battery (100) according to claim 1 or 2, further comprising a cap assembly (120), the cap assembly (120) closing an opening of the case (101),
wherein the first insulating plate (200, 400, 500) is interposed between one side of the electrode assembly (150) and the cap assembly (120).

4. The secondary battery (100) according to any of claims 1 to 3, wherein the case (101) comprises:
a sidewall portion (105) having a substantially annular cross-sectional geometry;
a beading portion (110) protruding between the first insulating plate (200, 400, 500) and the cap assembly (120) from the sidewall portion (105) such that the cap assembly (120) is spaced apart from the first insulating plate (200, 400, 500); and
a crimping portion (115) continuing from the beading portion (110) and surrounding the cap assembly (120) such that the cap assembly (120) is not separated from the case (101).

5. The secondary battery (100) according to claim 4, wherein the beading portion (110) presses the first insulating plate (200, 400, 500) toward the electrode assembly (150).

6. The secondary battery (100) according to claim 4 or 5, wherein the first insulating plate (500) further comprises:
a central portion (560) having a substantially circular planar geometry and having a substantially uniform thickness; and
an annular outer circumferential portion (570) continuing from an outer circumference of the central portion (560), the annular outer circumferential portion (570) inclined such that a thickness of the annular outer circumferential portion (570) decreases in a radial direction of the first insulating plate (500), and the annular outer circumferential portion (570) is pressed by the beading portion (110).

7. The secondary battery (100) according to claim 4 or 5, wherein the first insulating plate (400) further comprises:
a central (460) portion having a substantially circular planar geometry and a substantially uniform thickness; and
an annular outer circumferential portion (470) continuing from and have a step configuration with an outer circumference of the central portion (460), the annular outer circumferential portion (470) having a thickness less than the thickness of the central portion (460), and the annular outer circumferential portion (470) is pressed by the beading portion (110).

8. The secondary battery (100) according to any of claims 3 to 7, further comprising:
an electrode tab (180A, 180B) electrically connecting the electrode assembly (150) and the cap assembly (120),
wherein the first insulating plate (200, 400, 500) further comprises a through hole (240, 440, 540) such that the electrode tab (180A, 180B) passes through the through hole (240, 440, 540).

9. The secondary battery (100) according to claim 8, wherein the first insulating plate (200, 400, 500) further comprises an inner insulating layer (450) coated with an insulating member such that the core portion (201, 401, 501) is not exposed at an inner surface of the through hole (240, 440, 540).

10. The secondary battery (100) according to claim 8 or 9, wherein the electrode tab (180A) comprises:
a tab core portion (181) comprising a conductive material; and
an insulating sheath (187) surrounding an outer circumferential surface of the tab core portion (181), the insulating sheath (187) comprising an insulating material.

11. A method of fabricating a secondary battery (100), comprising:
fabricating a first insulating plate (200, 400, 500) comprising a core portion (201, 401, 501) and an insulating portion (210, 410, 510), the insulating portion (210, 410, 510) having a rigidity less than a rigidity of the core portion (201, 401, 501), the insulating portion (210, 410, 510) comprising an insulating material, the insulating portion (210, 410, 510) surrounding the core portion (201, 401, 501);
inserting an electrode assembly (150) into a case (101) through an opening that is open at one side of the case (101);
inserting the first insulating plate (200, 400, 500) into the case (101) through the opening; and
coupling a cap assembly (120) to the case (101) to close the opening.

12. The method according to claim 11, wherein the fabricating comprises:
inserting the core portion (201, 501) into a forming mold (10, 50) and fixing the core portion (201, 501) in the forming mold (10, 50); and
injecting an insulating material into the forming mold (10, 50) and curing the insulating material to form the insulating portion (210, 510).

13. The method according to claim 11 or 12, further comprising forming a through hole (240, 440, 540) through the first insulating plate (200, 400, 500) in a thickness direction.

14. The method according to claim 13, further comprising coating an inner surface of the through hole (440) with an insulating member to form an inner insulating layer (450).

15. The method according to claim 11, wherein the fabricating comprises:
forming a through hole (520, 530, 540) through the core portion (501) in a thickness direction;
inserting the core portion (501) in a forming mold (50) and fixing the core portion (501) in the forming mold (50); and
injecting an insulating material into the forming mold (50) and curing the insulating material to form the insulating portion (510),
wherein the insulating portion (510) covers the core portion (501) such that the through hole (520, 530, 540) is not closed.
